Europäisches Patentamt

European Patent Office

Office européen des brevets

(11) Numéro de publication: **0 015 208**

**A1**

(12) # DEMANDE DE BREVET EUROPEEN

(21) Numéro de dépôt: **80400239.2**

(51) Int. Cl.³: **F 02 G 5/04**

(22) Date de dépôt: **19.02.80**

(30) Priorité: **22.02.79 FR 7904555**

(43) Date de publication de la demande:
**03.09.80 Bulletin 80/18**

(84) Etats Contractants Désignés:
**BE CH DE GB IT NL SE**

(71) Demandeur: **SOCIETE D'ETUDES DE MACHINES THERMIQUES S.E.M.T.**
**2, Quai de Seine**
**F-93202 Saint-Denis(FR)**

(72) Inventeur: **Daugas, Claude**
**2, rue Ernest Renan**
**F-78340 Les Clayes s/bois(FR)**

(74) Mandataire: **Beauchamps, Georges et al,**
**Cabinet Z.Weinstein 20, avenue de Friedland**
**F-75008 Paris(FR)**

(54) **Procédé et dispositif de récupération d'énergie thermique dans un moteur à combustion interne suralimenté.**

(57) L'invention consiste à produire un complément d'énergie par utilisation d'un cycle de Rankine, et pour cela, à préchauffer le liquide de travail utilisé par échange thermique en (33) avec l'air sortant du compresseur (16) de suralimentation du moteur (10) à combustion interne.

L'invention concerne la récupération d'énergie thermique sur un moteur à combustion interne suralimenté.

EP 0 015 208 A1

1

<u>"Procédé et dispositif de récupération d'énergie thermique dans un moteur à combustion interne suralimenté"</u>.

L'invention concerne généralement un procédé et un dispositif de récupération d'énergie thermique dans un moteur à combustion interne suralimenté, en vue de fabriquer un complément d'énergie par un cycle de Rankine.

On sait qu'actuellement on cherche à rentabiliser au maximum l'utilisation des moteurs à combustion interne, et en particulier des gros moteurs Diesels suralimentés, et pour cela à utiliser la chaleur produite par les moteurs, et non uniquement la puissance de sortie qu'ils fournissent.

Pour produire un complément d'énergie par récupération de l'énergie thermique d'un moteur à combustion interne, il est connu d'utiliser un cycle de Rankine. Dans un tel cycle, un fluide de travail est généralement chauffé sous pression, pui détendu en produisant de l'énergie, condensé, à nouveau chauffé sous pression et vaporisé, etc.

Généralement, on utilise uniquement l'énergie thermique des gaz d'échappement du moteur à combustion interne, pour chauffer le fluide de travail. Dans certains cas, pour préchauffer le fluide de travail de sa température de condensation jusqu'à une température aussi proche que possible de sa température d'ébulition, on utilise une partie de la chaleur de l'eau du circuit haute température

2

de réfrigération du moteur à combustion interne, ce circuit étant alors porté à une température aussi élevée que possible.

La présente invention a précisément pour but d'améliorer encore le préchauffage du fluide de travail, et donc la récupération d'énergie sur un moteur alternatif à combustion interne, quand ce moteur est du type suralimenté.

Elle propose à cet effet un procédé de récupération d'énergie thermique dans un moteur à combustion interne suralimenté, consistant à produire un complément d'énergie par un cycle de Rankine, comprenant une étape de préchauffage d'un fluide de travail de sa température de condensation jusqu'au voisinage de sa température d'ébulition, par exemple par échange thermique avec le liquide de réfrigération du moteur à combustion interne, caractérisé en ce qu'il consiste à préchauffer de façon supplémentaire le fluide de travail au moyen de l'énergie thermique de l'air sortant du compresseur de suralimentation du moteur à combustion interne.

L'invention propose également un dispositif de récupération d'énergie thermique, par exécution de ce procédé, et qui est caractérisé en ce que le circuit de chauffage du fluide de travail utilisé pour la production d'un complément d'énergie par un cycle de Rankine, comprend, éventuellement en série avec un échangeur thermique traversé par le liquide de réfrigération du moteur, un échangeur thermique alimenté par l'air sortant du compresseur de suralimentation du moteur.

On a en effet constaté que, dans un moteur ayant un taux de suralimentation élevé, l'air sortant du compresseur de suralimentation est à une température qui est

3

supérieure à la température maximale que l'on peut obtenir au circuit d'eau de réfrigération du moteur. Cette énergie thermique de haut niveau de l'air sortant du compresseur de suralimentation est, selon l'invention, utilisée à son tour pour réchauffer le fluide de travail à une température encore plus proche de sa température de vaporisation. On peut ainsi diminuer la part économiseur de la chaudière de récupération de chaleur de gaz d'échappement du moteur à combustion interne, et donc augmenter le débit de fluide de travail, ce qui permet d'augmenter la puissance du détendeur utilisé dans le cycle de Rankine, et donc le rendement global du procédé ou du dispositif.

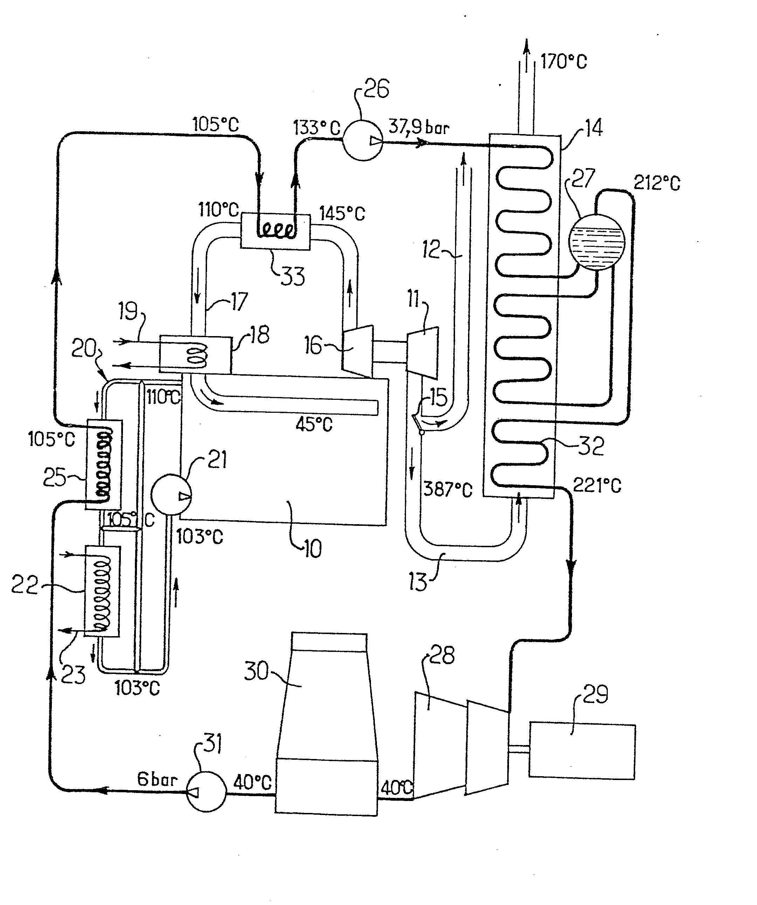

L'invention sera mieux comprise, et d'autres buts, détails, caractéristiques et avantages de celle-ci apparaitront plus clairement à la lecture de la description explicative qui va suivre, donnée uniquement à titre d'exemple, en référence aux dessins annexés et dans lesquels la figure unique représente schématiquement un dispositif de récupération d'énergie thermique selon l'invention.

De façon classique, un moteur à combustion interne 10 est associé à un groupe turbocompresseur de suralimentation, dans lequel la turbine 11 est entrainée, de façon non représentée, par les gaz d'échappement du moteur qui peuvent ensuite emprunter à la sortie de la turbine soit un conduit 12 de rejet à l'atmosphère, soit un conduit 13 allant vers un échangeur de chaleur 14, en fonction de la position d'un volet 15.

La turbine 11 entrainée par les gaz d'échappement entraine à son tour un compresseur 16 fournissant de l'air comprimé de suralimentation au moteur 10, par un conduit 17. L'air comprimé sortant du compresseur 16 est à une

4

température assez élevée, et on lui fait traverser un échangeur de chaleur 18, refroidi par un circuit d'eau froide 19, avant de l'amener dans le moteur 10.

Ce moteur comprend encore un circuit 20 de refroidissement ou réfrigération par eau, comprenant une pompe de circulation 21 et des conduits, comme représenté sur le dessin. Ces conduits traversent un échangeur de chaleur 22 alimenté par un circuit d'eau froide 23, comme représenté.

La récupération d'énergie par un cycle de Rankine consiste, comme indiqué plus haut, à faire circuler un fluide de travail, qui peut être du fluorinol dans un circuit fermé comprenant un échangeur de chaleur 25 de préchauffage, alimenté par une partie de l'eau à haute température sortant du moteur 10, une pompe d'alimentation 26 mettant ce fluide sous pression, l'échangeur de chaleur précité 14 traversé par les gaz d'échappement, et qui est associé à un bouilleur 27 de la façon représentée sur les dessins, un détendeur 28 constitué ici par une turbine radiale à deux étages, entrainant par exemple un alternateur asynchrone 29, un aéro-condenseur 30, et une pompe d'extraction 31.

On notera au passage que l'échangeur de chaleur 14 alimenté par les gaz d'échappement comprend une partie sur-chauffeur désignée par la référence 32.

Selon l'invention, le fluide de travail sortant de l'échangeur de chaleur 25, et qui a été préchauffé au voisinage de sa température de vaporisation par échange de chaleur avec une partie de l'eau haute température du circuit de refroidissement du moteur 10, est encore préchauffé par échange de chaleur avec l'air comprimé chaud fourni par le compresseur 16 de suralimentation

5

du moteur, en passant dans un échangeur de chaleur 33 alimenté par cet air comprimé chaud.

On voit sur le dessin que cette opération supplémentaire de préchauffage permet de faire passer le fluide de travail d'une température de 105° à une température de 133°C, tout en refroidissant l'air comprimé de suralimentation d'une température de 145°C à une température de 110°C.

Le dispositif représenté sur la figure fonctionne de la façon classique suivante :

le fluide de travail extrait par la pompe 31 de l'aéro-condenseur 30, passe dans l'échangeur de chaleur 25 alimenté par l'eau haute température du circuit de refroidissement du moteur 10, est ensuite préchauffé de façon supplémentaire par l'air comprimé de suralimentation du moteur dans l'échangeur 33, il est comprimé par la pompe 26, vaporisé et surchauffé dans l'échangeur de chaleur 14 alimenté par les gaz d'échappement, envoyé dans la turbine radiale 28 à deux étages, où il est détendu en produisant de l'énergie, et finalement renvoyé à l'aérocondenseur 30, d'où il est à nouveau extrait par la pompe 31, etc.

Dans le cas particulier représenté, la détente du fluide de travail dans la trubine 28 permet d'entrainer cette turbine, et donc l'alternateur 29, pour produire de l'énergie électrique.

Bien entendu, l'invention n'est nullement limitée au mode de réalisation décrit et représenté qui n'a été donné qu'à titre d'exemple. En particulier, elle comprend tous les moyens constituants des équivalents techniques

6

des moyens décrits, ainsi que leurs combinaisons, si celles-ci sont exécutées suivant son esprit et mises en  oeuvre dans le cadre des revendications qui suivent.

1

Revendications de brevet

1. Procédé de récupération d'énergie thermique dans un moteur à combustion interne suralimenté, consistant à produire un complément d'énergie par un cycle de Rankine, et comprenant une étape de préchauffage d'un fluide de travail depuis sa température de condensation jusqu'au voisinage de sa température d'ébulition, par exemple par échange thermique avec le liquide de réfrigération du moteur,
caractérisé en ce qu'il consiste à préchauffer de façon supplémentaire le fluide de travail au moyen de l'énergie thermique de l'air sortant du compresseur (16) de suralimentation du moteur à combustion interne.

2. Dispositif de récupération d'énergie thermique, par exécution du procédé décrit en revendication 1, caractérisé en ce que le circuit de préchauffage du fluide de travail utilisé pour la production d'un complément d'énergie par un cycle de Rankine, comprend, par exemple en série avec un échangeur thermique (18) traversé par le liquide de réfrigération du moteur, un échangeur thermique (33) alimenté par l'air sortant du compresseur (16) de suralimentation du moteur.

1/1

# RAPPORT DE RECHERCHE EUROPEENNE

**Office européen des brevets**

Numéro de la demande

EP 80 40 0239

| Catégorie | DOCUMENTS CONSIDERES COMME PERTINENTS | Revendication concernée |
|---|---|---|
| | Citation du document avec indication, en cas de besoin, des parties pertinentes | |
| X | <u>DD - A - 96 753</u> (GATZKE)<br>* Figure; colonne 4, lignes 15-65* | 1,2 |
| X | <u>US - A - 4 031 705</u> (BERG)<br>* Figure 1; colonne 5, ligne 14 à colonne 7, ligne 68 * | 1,2 |
| A | <u>FR - A - 2 409 379</u> (SULZER)<br>* Figure 1; revendications 1,5 * | 1,2 |
| A | <u>FR - A - 2 424 411</u> (MESSIER)<br>* Figure 1; revendications 1-5 * | 1,2 |

**CLASSEMENT DE LA DEMANDE (Int. Cl. 3)**

F 02 G 5/04

**DOMAINES TECHNIQUES RECHERCHES (Int. Cl. 3)**

F 02 G

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 08-05-1980 | WASSENAAR |

OEB Form 1503.1   06.78